# EUROPÄISCHE PATENTANMELDUNG

(11) **EP 4 786 282 A1**
(43) Veröffentlichungstag der Anmeldung: **05.08.2026**
(21) Anmeldenummer: 26154754.1
(22) Anmeldetag: 28.01.2026
(51) Int. Cl.: B60R 13/02, B60R 7/04

(54) **ROLLO UND FAHRZEUG MIT ROLLO**

(30) Priorität: 29.01.2025 DE 102025103278
(71) Anmelder: KTX GmbH, 42653 Solingen (DE)
(72) Erfinder: Schulz, Dipl.-Ing. Uwe, 42389 Wuppertal (DE)
(74) Vertreter: Janke Scholl Patentanwälte PartG mbB

(57) **Zusammenfassung**

Rollo für einen Innenraum eines Fahrzeugs, wobei das Rollo aufweist: eine Deckschicht (4), eine Trägerschicht (6) und Rippen (8), wobei die Rippen (8) parallel und mit einem Abstand (a1) zueinander aufgereiht angeordnet sind, wobei die Deckschicht (4) auf einer ersten Seite (10) der Trägerschicht (6) angeordnet ist, wobei die Rippen (8) auf einer der ersten Seite (10) abgewandten zweiten Seite (12) der Trägerschicht (6) angeordnet sind, wobei die Trägerschicht (6) einen weichen Kunststoff aufweist und die Rippen (8) einen im Vergleich zum weichen Kunststoff der Trägerschicht (6) härteren Kunststoff aufweisen.

## Beschreibung

Die vorliegende Erfindung betrifft ein Rollo für einen Innenraum eines Fahrzeugs. Weiter betrifft die Erfindung ein Fahrzeug mit einem solchen Rollo.

Das optische Erscheinungsbild, die Haptik, die Verarbeitung und die Funktionalität des Interieurs eines Fahrzeugs spielt für eine zu befördernde Personen eine bedeutende Rolle bezüglich der Qualitätswahrnehmung des Fahrzeugs insgesamt.

So wird im Interieur eines Fahrzeugs einerseits eine großer Funktionsumfang erwartet, d.h. eine Vielzahl von Ablagen, Fächern, Halterungen, Bildschirmen, Bedienelementen, Schaltern etc., um ein komfortables Reisen zu ermöglichen. Andererseits soll ein möglichst aufgeräumtes, klares Erscheinungsbild des Interieurs gegeben sein.

Ein Ansatz zum Erreichen eines aufgeräumten, klaren Erscheinungsbilds des Interieurs ist, die beispielhaft genannten Ablagen, Fächer, Halterungen, Bildschirme, Bedienelemente, Schalter etc. versenkbar bzw. ausfahrbar zu gestalten, so dass diese nur im Gebrauch hervortreten. Eine andere Möglichkeit besteht darin, die beispielhaft genannten Ablagen, Fächer, Halterungen, Bildschirme, Bedienelemente, Schalter etc. abdeckbar zu gestalten, so dass diese z.B. mit einem Rollo abgedeckt werden können. Ein solches Rollo schützt den jeweiligen abgedeckten Bereich zudem vor Verschmutzung und/oder mechanischer Beschädigung.

Auch für das Rollo gilt die zuvor diskutierte Forderung eines möglichst anmutenden optischen Erscheinungsbilds. So soll sich das Rollo möglichst nahtlos in das Erscheinungsbild der umliegenden Dekor- oder Funktionsflächen einfügen. Zudem gilt für alle Komponenten eines Innenraums eines Fahrzeugs, dass diese, soweit möglich, leicht zu pflegen und zu reinigen sein sollten.

Vor diesem Hintergrund liegt der vorliegenden Erfindung die technische Problemstellung zugrunde, ein verbessertes Rollo für ein Fahrzeug anzugeben, das insbesondere ansprechendes optisches Erscheinungsbild hat, sowie leicht zu pflegen und zu reinigen ist. Weiter soll ein Fahrzeug mit einem solchen Rollo angegeben werden.

Die voranstehend beschriebene, technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Rollo für einen Innenraum eines Fahrzeugs, wobei das Rollo aufweist: eine Deckschicht, eine Trägerschicht und Rippen, wobei die Rippen parallel und mit einem Abstand zueinander aufgereiht angeordnet sind, wobei die Deckschicht auf einer ersten Seite der Trägerschicht angeordnet ist, wobei die Rippen auf einer der ersten Seite abgewandten zweiten Seite der Trägerschicht angeordnet sind, wobei die Trägerschicht einen weichen Kunststoff aufweist und die Rippen einen im Vergleich zum weichen Kunststoff der Trägerschicht härteren Kunststoff aufweisen.

Untersuchungen der Anmelderin haben gezeigt, dass die Verwendung einer Deckschicht, die unmittelbar auf den Rippen platziert wird, dazu führt, dass die Rippen sich auf der Oberfläche der Deckschicht abzeichnen bzw. die Deckschicht sich derart eng an die Rippen anschmiegt, dass die Rippen im Bereich der einem Bediener im fertig montierten Zustand zugewandten Sichtseite, erkennbar sind. Hierdurch wird das optische Erscheinungsbild der Deckschicht gestört. Zudem konnte keine dauerhaft zuverlässige Anhaftung der Deckschicht an dem harten Kunststoff der Rippen erreicht werden.

Untersuchungen der Anmelderin haben weiter gezeigt, dass allein die Verwendung der Trägerschicht mit den Rippen, ohne dass diese Trägerschicht mit einer Deckschicht kaschiert ist, wiederum dazu führt, dass sich die Rippen abzeichnen, so dass die Rippen im Bereich der einem Bediener im fertig montierten Zustand zugewandten Sichtseite erkennbar sind.

Die erfindungsgemäße Anordnung der Trägerschicht zwischen der Deckschicht und den Rippen ermöglicht eine durchgehend glatte, unterbrechungsfreie Optik der Deckschicht, so dass die Rippen nicht erkennbar sind und sich nicht auf der Oberfläche der Deckschicht abzeichnen. Zudem kann eine zuverlässige Anhaftung der Deckschicht an der weichen Trägerschicht gewährleistet werden.

Die Deckschicht kann eine glatte Sichtoberfläche aufweisen. Die Sichtoberfläche kann matt oder hochglänzend ausgeführt sein. Die Sichtoberfläche kann eine profilierte bzw. haptische Oberfläche ausbilden, z.B. zur Nachbildung einer Holzmaserung. Die Sichtoberfläche kann demnach eine Narbung, Maserung oder Konturierung aufweisen.

Die Rippen können in äquidistanten Abständen zueinander angeordnet sein.

Für eine Mehrzahl der Rippen oder für jede Rippe der Rippen kann gelten, dass eine jeweilige einzelne Rippe eine Längserstreckung aufweist, die senkrecht zu einer Verschieberichtung des Rollos orientiert ist.

Die Deckschicht kann eine Dicke aufweisen, ausgewählt aus einem Bereich von 0,1 mm bis 1,5 mm, insbesondere ausgewählt aus einem Bereich von 0,1 mm bis 1 mm, weiter insbesondere ausgewählt aus einem Bereich von 0,25 mm bis 0,5 mm.

Die Trägerschicht kann eine Dicke aufweisen, ausgewählt aus einem Bereich von 0,5 mm bis 1,5 mm, insbesondere ausgewählt aus einem Bereich von 0,8 mm bis 1,5 mm.

Untersuchungen der Anmelderin haben gezeigt, dass insbesondere für eine Dicke der Trägerschicht größer oder gleich 0,8 mm verhindert werden kann, dass sich die Rippen in der Deckschicht abzeichnen.

Die Rippen können eine Dicke aufweisen, ausgewählt aus einem Bereich von 4 mm bis 15 mm.

Es kann vorgesehen sein, dass eine Dicke der Trägerschicht mindestens dem Doppelten der Dicke der Deckschicht entspricht und höchstens dem Zehnfachen der Dicke der Deckschicht entspricht, insbesondere höchstens dem Fünffachen der Dicke der Deckschicht entspricht,

Alternativ oder ergänzend kann vorgesehen sein, dass eine Dicke der Rippen mindestens dem Doppelten der Dicke der Trägerschicht entspricht und höchstens dem Zehnfachen der Dicke der Trägerschicht entspricht, insbesondere höchstens dem Fünffachen der Dicke der Trägerschicht entspricht.

Wenn vorliegend von einer Dicke gesprochen wird, so wird diese senkrecht zu einer Länge und einer Breite des Rollos im abgewickelten Zustand gemessen.

Wenn vorliegend von einem abgewickelten Zustand gesprochen wird, so bedeutet dies, dass der sich im abgewickelten Zustand befindende Bereich des Rollos flach liegt, so dass die Oberseite der Deckschicht eine Planebene ausbildet, die Trägerschicht in diesem Bereich ebenfalls planliegt und die Rippen in diesem Bereich entlang einer Planebene aufgereiht angeordnet sind.

Wenn vorliegend von einem aufgewickelten Zustand gesprochen wird, so bedeutet dies, dass der sich im aufwickelten Zustand befindende Bereich des Rollos nicht flach liegt und zumindest abschnittsweise gebogen ist, so dass die Oberseite der Deckschicht eine gekrümmte Fläche ausbildet, die Trägerschicht in diesem Bereich ebenfalls gekrümmt ist und die Rippen in diesem Bereich entlang einer gekrümmten Fläche aufgereiht angeordnet sind.

Die Deckschicht kann eine Deckfolie sein.

Die Deckschicht, insbesondere Deckfolie, kann ein Polycarbonat aufweisen oder aus einem Polycarbonat bestehen. Es kann vorgesehen sein, dass die Deckschicht einen oder mehrere der nachfolgend aufgelisteten Kunststoffe aufweist oder aus einem oder mehreren der nachfolgend aufgelisteten Kunststoffe besteht: Polyethylen, Polypropylen, Polyvinylchlorid, Polylactide, Polyethylenterephthalat.

Die Deckschicht kann Leder, Lederimitate, Kunstleder, Alcantara, Velours oder andere Dekorschichten aufweisen.

Die Deckschicht und/oder die Trägerschicht können elastisch und reversibel verformbar sein.

Es kann vorgesehen sein, dass die Rippen nicht elastisch sind und nicht reversibel verformbar sind.

Die Deckschicht und die Trägerschicht können miteinander verklebt sein. Die Deckschicht und die Trägerschicht können stoffschlüssig miteinander verbunden sein, insbesondere im Spritzgussverfahren.

Die Rippen und die Trägerschicht können stoffschlüssig miteinander verbunden sein, insbesondere spritzgegossen sein.

Es kann vorgesehen sein, dass die Rippen einen oder mehrere der nachfolgend aufgelisteten Kunststoffe aufweisen oder aus einem oder mehreren der nachfolgend aufgelisteten Kunststoffe bestehen kann: Acrylnitril-Butadien-Styrol-Copolymer; Polycarbonat; Polyamid; und/oder dass die Rippen einen faserverstärkten Kunststoff aufweisen oder aus einem faserverstärkten Kunststoff, wie einen glasfaserverstärkten Kunststoff, einem kohlenstofffaserverstärkten Kunststoff oder dergleichen.

Es kann vorgesehen sein, dass die Rippen einen Querschnitt aufweisen, der in von der Deckschicht und der Trägerschicht wegweisender Richtung verjüngt ist, insbesondere, dass die Rippen einen im Wesentlichen trapezförmigen Querschnitt aufweisen.

Die Rippen können an einander abgewandten Enden Führungsabschnitte aufweisen, die über einer Breite der Deckschicht und der Trägerschicht hinweg auskragend erstreckt sind, wobei die Führungsabschnitte zum formschlüssigen Eingreifen in einander gegenüberliegende Führungsnuten, die im Innenraum des Fahrzeugs ausgebildet sind, vorgesehen sind.

Die Trägerschicht kann einen thermoplastischen Kunststoff aufweisen oder aus einem thermoplastischen Kunststoff besteht.

Gemäß einem zweiten Aspekt betrifft die Erfindung ein Fahrzeug, mit einem Innenraum zum Aufnehmen von zu befördernden Personen, wobei der Innenraum mindestens einen abdeckbaren Bereich, wie eine Ablage, ein Fach, eine Halterung, ein Fenster, einen Bildschirm, ein Bedienelement oder dergleichen aufweist, mit einem verschiebbaren, wickelbaren Rollo zum Abdecken des mindestens einen abdeckbaren Bereichs, wobei das Rollo aus einer geöffneten, zumindest teilweise aufgewickelten Position in eine geschlossene zumindest teilweise abgewickelte Position verschiebbar ist, wobei das Rollo in erfindungsgemäßer Weise ausgebildet ist.

Das Fahrzeug kann z.B. ein Kraftfahrzeug sein, wie ein Personenkraftwagen, ein Lastkraftwagen oder dergleichen. Das Fahrzeug kann z.B. ein schienengebundenes Fahrzeug sein, wie ein Personenzug oder dergleichen. Das Fahrzeug kann ein Luftfahrzeug sein, wie ein Flugzeug oder dergleichen.

Nachfolgend wird die Erfindung anhand einer Ausführungsbeispiele darstellenden Zeichnung näher erläutert. Es zeigen jeweils schematisch:
- Fig. 1: ein erfindungsgemäßes Rollo in einem abgewickelten Zustand in einer perspektivischen Ansicht;
- Fig. 2: einen teilweisen Querschnitt des Rollos aus Fig. 1;

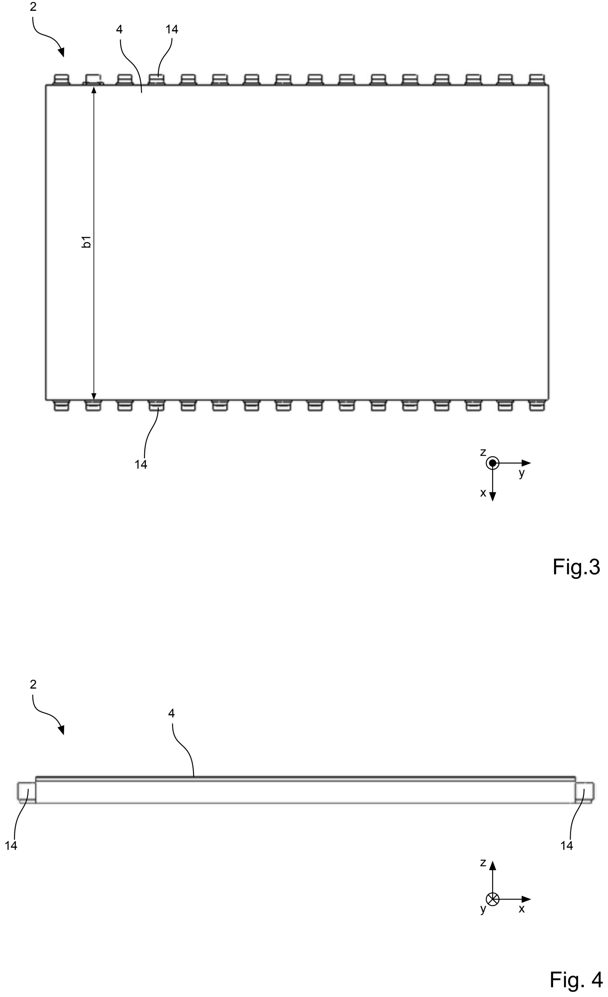

- Fig. 3: das Rollo aus Fig. 1 in einer Draufsicht;
- Fig. 4: das Rollo aus Fig. 1 in einer Frontansicht;
- Fig. 5: das Rollo aus Fig. 1 mit einem aufgewickelten Bereich und einem abgewickelten Bereich;
- Fig. 6: einen Ausschnitt eines Innenraums eines Fahrzeugs mit einem Rollo.

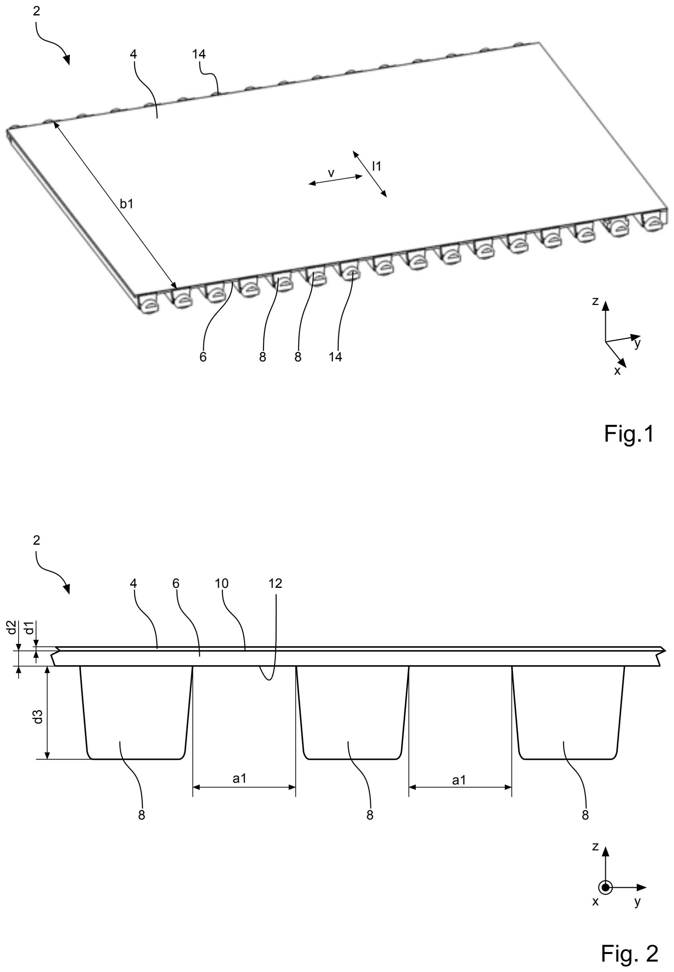

Fig. 1 zeigt erfindungsgemäßes Rollo 2 in einem abgewickelten Zustand in einer perspektivischen Ansicht. Das Rollo 2 hat eine Deckschicht 4, die eine Deckfolie 4 ist, eine Trägerschicht 6 und Rippen 8. Die Rippen 8 sind parallel und mit einem Abstand zueinander aufgereiht angeordnet.

Zur besseren Nachvollziehbarkeit der nachstehenden Ausführungen wird ein kartesisches Koordinatensystem x, y, z eingeführt.

Die Deckschicht 4 ist auf einer ersten Seite 10 der Trägerschicht 4 angeordnet. Die Rippen 8 sind auf einer der ersten Seite 10 abgewandten zweiten Seite 12 der Trägerschicht 6 angeordnet.

Die Trägerschicht 4 besteht aus einem weichen Kunststoff. Die Rippen 8 bestehen aus einem im Vergleich zum weichen Kunststoff der Trägerschicht härteren Kunststoff.

Die Rippen 8 sind in äquidistanten Abständen a1 zueinander angeordnet. Der Abstand a1 kann z.B. zwischen 5 mm und 10 mm betragen.

Jede Rippe 8 weist eine Längserstreckung I1 parallel zur x-Richtung auf, die senkrecht zu einer Verschieberichtung v des Rollos 2 orientiert ist, wobei die Verschieberichtung des Rollos 2 parallel zur y-Richtung orientiert ist.

Die Deckschicht 4 weist eine Dicke d1 auf, ausgewählt aus einem Bereich von 0,25 mm bis 0,5 mm.

Die Trägerschicht 6 weist eine Dicke d2 auf, ausgewählt aus einem Bereich von 0,2 mm bis 1 mm.

Die Rippen 8 weisen eine Dicke d3 auf, ausgewählt aus einem Bereich von 4 mm bis 15 mm.

Die jeweilige Dicke d1, d2, d3 wird im abgewickelten Zustand parallel zur z-Richtung gemessen.

Die Deckschicht 4 besteht aus einem Polycarbonat.

Die Trägerschicht 6 besteht aus einem thermoplastischen Kunststoff.

Die Rippen 8 bestehen aus einem Material oder aus mehreren Materialien, ausgewählt aus: Acrylnitril-Butadien-Styrol-Copolymer; Polycarbonat; Polyamid - wobei die Materialen faserverstärkt sein können.

Die Deckschicht 4 und die Trägerschicht 6 sind elastisch und reversibel verformbar. Die Rippen 8 sind nicht elastisch sind und nicht reversibel verformbar.

Die Deckschicht 4 und die Trägerschicht 6 sind miteinander verklebt.

Die Rippen 8 und die Trägerschicht 8 sind stoffschlüssig miteinander verbunden, und zwar durch Spritzgießen.

Wie Fig. 2 zu entnehmen, weisen die Rippen 8 einen Querschnitt auf, der in von der Deckschicht 4 und der Trägerschicht 6 wegweisender Richtung verjüngt ist. Die Rippen 8 weisen einen im Wesentlichen trapezförmigen Querschnitt auf.

Die Rippen weisen an einander abgewandten Enden Führungsabschnitte 14 auf, die über einer Breite b1 der Deckschicht 4 und der Trägerschicht 6 hinweg auskragend erstreckt sind. Die Führungsabschnitte 14 sind zum formschlüssigen Eingreifen in einander gegenüberliegende Führungsnuten, die im Innenraum eines Fahrzeugs ausgebildet sind, vorgesehen.

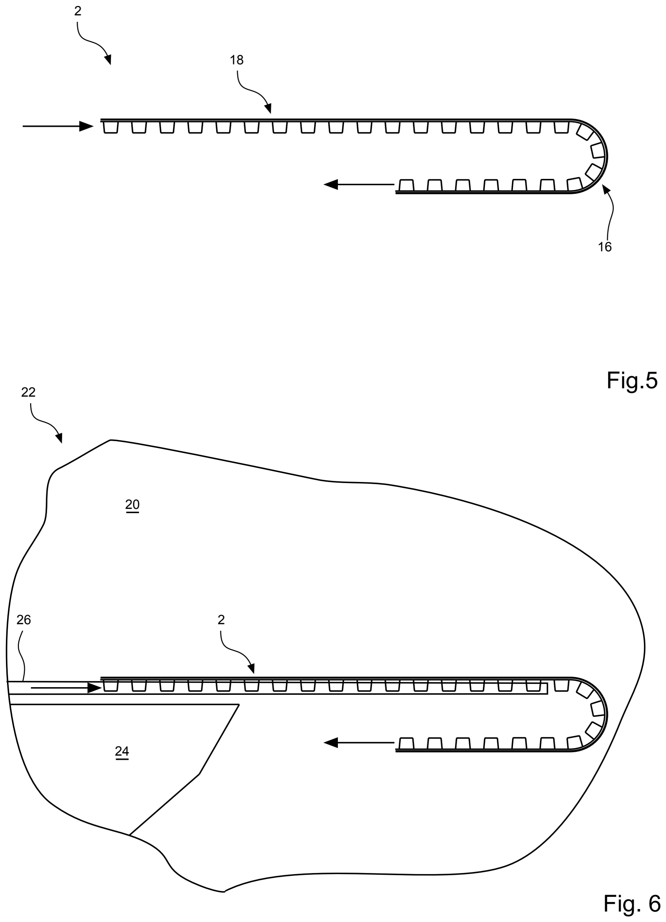

Fig. 5 zeigt das Rollo 2 aus Fig. 1 mit einem aufgewickelten Bereich 16 und einem abgewickelten Bereich 18. "Aufgewickelt" kann im Sinne dieser Anmeldung das in Fig. 5 gezeigte biegen des Rollo 2 bedeuten, ohne, dass ein mehrlagiges Umwickeln einer Wickelwelle oder Wickelachse stattfindet oder kann ein mehrlagiges Aufwickeln bedeuten, wobei ein mehrlagiges Umwickeln einer Wickelwelle oder Wickelachse stattfindet.

Fig. 6 einen Ausschnitt 20 eines Innenraums eines Fahrzeugs 22 mit dem Rollo 2.

Der Innenraum 20 hat einen abdeckbaren Bereich 24. Der abdeckbare Bereich 24 ist vorliegend eine Ablage. Das verschiebbare, wickelbare Rollo 2 ist zum Abdecken des abdeckbaren Bereichs 24 eingerichtet.

Das Rollo 2 ist in gegenüberliegenden Nuten 26 des Fahrzeugs 22 formschlüssig geführt und ist aus einer geöffneten, zumindest teilweise aufgewickelten Position in eine geschlossene zumindest teilweise abgewickelte Position verschiebbar, um den abdeckbaren Bereich 24 abzudecken oder freizulegen.

## Patentansprüche

1. Rollo für einen Innenraum eines Fahrzeugs, wobei das Rollo aufweist:
- eine Deckschicht (4),
- eine Trägerschicht (6) und
- Rippen (8), wobei die Rippen (8) parallel und mit einem Abstand (a1) zueinander aufgereiht angeordnet sind,
- wobei die Deckschicht (4) auf einer ersten Seite (10) der Trägerschicht (6) angeordnet ist,
- wobei die Rippen (8) auf einer der ersten Seite (10) abgewandten zweiten Seite (12) der Trägerschicht (6) angeordnet sind,
- wobei die Trägerschicht (6) einen weichen Kunststoff aufweist und
- die Rippen (8) einen im Vergleich zum weichen Kunststoff der Trägerschicht (6) härteren Kunststoff aufweisen.

2. Rollo nach Anspruch 1,
**dadurch gekennzeichnet, dass**
die Rippen (8) in äquidistanten Abständen (a1) zueinander angeordnet sind und/oder
für eine Mehrzahl der Rippen (8) oder für jede Rippe (8) der Rippen (8) gilt, dass eine jeweilige einzelne Rippe (8) eine Längserstreckung (11) aufweist, die senkrecht zu einer Verschieberichtung (v) des Rollos (2) orientiert ist.

3. Rollo nach einem der voranstehenden Ansprüche,
**dadurch gekennzeichnet, dass**
die Deckschicht (4) eine Dicke (d1) aufweist, ausgewählt aus einem Bereich von 0,1 mm bis 1,5 mm, insbesondere ausgewählt aus einem Bereich von 0,1 mm bis 1 mm, weiter insbesondere ausgewählt aus einem Bereich von 0,25 mm bis 0,5 mm.

4. Rollo nach Anspruch 3,
**dadurch gekennzeichnet, dass**
eine Dicke (d2) der Trägerschicht (6) mindestens dem Doppelten der Dicke (d1) der Deckschicht (4) entspricht und höchstens dem Zehnfachen der Dicke (d1) der Deckschicht (4) entspricht, insbesondere höchstens dem Fünffachen der Dicke (d1) der Deckschicht (4) entspricht,
und/oder
eine Dicke (d3) der Rippen (8) mindestens dem Doppelten der Dicke (d2) der Trägerschicht (6) entspricht und höchstens dem Zehnfachen der Dicke (d2) der Trägerschicht (6) entspricht, insbesondere höchstens dem Fünffachen der Dicke (d2) der Trägerschicht (6) entspricht.

5. Rollo nach einem der voranstehenden Ansprüche,
**dadurch gekennzeichnet, dass**
die Deckschicht (4) ein Polycarbonat aufweist oder aus einem Polycarbonat besteht.

6. Rollo nach einem der voranstehenden Ansprüche,
**dadurch gekennzeichnet,**
**dass** die Deckschicht (4) und/oder die Trägerschicht (6) elastisch und reversibel verformbar sind
und/oder
**dass** die Rippen (8) nicht elastisch sind und nicht reversibel verformbar sind und/oder
**dass** die Deckschicht (4) und die Trägerschicht (6) miteinander verklebt sind und/oder
**dass** die Rippen (8) und die Trägerschicht (6) stoffschlüssig miteinander verbunden sind, insbesondere spritzgegossen sind.

7. Rollo nach einem der voranstehenden Ansprüche,
**dadurch gekennzeichnet,**
**dass** die Rippen (8) einen oder mehrere der nachfolgend aufgelisteten Kunststoffe aufweisen oder aus einem oder mehreren der nachfolgend aufgelisteten Kunststoffe bestehen:
- Acrylnitril-Butadien-Styrol-Copolymer;
- Polycarbonat;
- Polyamid;
und/oder
**dass** die Rippen (8) einen faserverstärkten Kunststoff aufweisen oder aus einem faserverstärkten Kunststoff, wie einen glasfaserverstärkten Kunststoff, einem kohlenstofffaserverstärkten Kunststoff oder dergleichen.

8. Rollo nach einem der voranstehenden Ansprüche,
**dadurch gekennzeichnet**,
die Rippen (8) einen Querschnitt aufweisen, der in von der Deckschicht (4) und der Trägerschicht (6) wegweisender Richtung verjüngt ist, insbesondere einen im Wesentlichen trapezförmigen Querschnitt aufweisen
und/oder
die Rippen (8) an einander abgewandten Enden Führungsabschnitte (14) aufweisen, die über einer Breite (b1) der Deckschicht (2) und der Trägerschicht (6) hinweg auskragend erstreckt sind, wobei die Führungsabschnitte (14) zum formschlüssigen Eingreifen in einander gegenüberliegende Führungsnuten (26), die im Innenraum (20) des Fahrzeugs (22) ausgebildet sind, vorgesehen sind.

9. Rollo nach einem der voranstehenden Ansprüche,
**dadurch gekennzeichnet**,
die Trägerschicht (6) einen thermoplastischen Kunststoff aufweist oder aus einem thermoplastischen Kunststoff besteht.

10. Rollo nach einem der voranstehenden Ansprüche,
**dadurch gekennzeichnet, dass**
die Deckschicht (4) eine Deckfolie ist.

11. Rollo nach einem der voranstehenden Ansprüche,
**dadurch gekennzeichnet, dass**
die Trägerschicht eine Dicke aufweist, ausgewählt aus einem Bereich von 0,5 mm bis 1,5 mm, insbesondere ausgewählt aus einem Bereich von 0,8 mm bis 1,5 mm.

12. Fahrzeug,
- mit einem Innenraum (20) zum Aufnehmen von zu befördernden Personen,
- wobei der Innenraum (20) mindestens einen abdeckbaren Bereich (24), wie eine Ablage, ein Fach, eine Halterung, ein Fenster, einen Bildschirm, ein Bedienelement oder dergleichen aufweist,
- mit einem verschiebbaren, wickelbaren Rollo (2) zum Abdecken des mindestens einen abdeckbaren Bereichs (24),
- wobei das Rollo (2) aus einer geöffneten, zumindest teilweise aufgewickelten Position in eine geschlossene zumindest teilweise abgewickelte Position verschiebbar ist,
- wobei das Rollo (2) gemäß einem der voranstehenden Ansprüche ausgebildet ist.
